# EUROPEAN PATENT APPLICATION

(11) **EP 2 236 365 A1**
(43) Date of publication of application: **06.10.2010**
(21) Application number: 09156867.5
(22) Date of filing: 31.03.2009
(51) Int. Cl.: B60S 1/38

(54) **Windscreen wiper device**

(71) Applicant: Federal-Mogul S.A., 6790 Aubange (BE)
(72) Inventor: Boland, Xavier, 6700 Arlon (BE)
(74) Representative: Hooiveld, Arjen Jan Winfried

(57) **Abstract**

A windscreen wiper device (1) comprising an elastic, elongated carrier element, as well as an elongated wiper blade (2) of a flexible material, which can be placed in abutment with a windscreen to be wiped, which wiper blade (2) includes at least one longitudinal groove (3), in which groove (3) at least one longitudinal strip (4) of the carrier element is disposed, wherein ends of said longitudinal strip are connected to respective connecting pieces (5), which windscreen wiper device (1) comprises a connecting device (6) for an oscillating arm, wherein said oscillating arm is pivotally connected to said connecting device (6) about a pivot axis near one end thereof, with the special feature that a substance is provided on said longitudinal strip (4) in order to lower the friction coefficient between contact surfaces of said longitudinal strip (4) and said wiper blade (2).

## Description

The present invention relates to a windscreen wiper device comprising an elastic, elongated carrier element, as well as an elongated wiper blade of a flexible material, which can be placed in abutment with a windscreen to be wiped, which wiper blade includes at least one longitudinal groove, in which groove at least one longitudinal strip of the carrier element is disposed, wherein ends of said longitudinal strip are connected to respective connecting pieces, which windscreen wiper device comprises a connecting device for an oscillating arm, wherein said oscillating arm is pivotally connected to said connecting device about a pivot axis near one end thereof.

Such a windscreen wiper device is generally known. This prior art windscreen wiper device is designed as a so-called "flat blade" or "yokeless blade", wherein no use is made of several yokes pivotally connected to each other, but wherein the wiper blade is biassed by the carrier element, as a result of which it exhibits a specific curvature.

The object of the invention is to provide an improved windscreen wiper device.

In order to accomplish that objective, a windscreen wiper device of the type referred to in the introduction is characterized according to the invention in that a substance is provided on said longitudinal strip in order to lower the friction coefficient between contact surfaces of said longitudinal strip and said wiper blade. Accordingly, due to this low friction coefficient, a slight movement of the wiper blade relative to the longitudinal strip is made possible in order to allow said wiper blade to follow any curvature of the windscreen to be wiped. Further, due to this low friction coefficient, adherence ("sticking") of said wiper blade onto said longitudinal strip in case the windscreen wiper device in practice is exposed to high temperatures, is avoided. It goes without saying that such an adherence would seriously affect the wiping properties of the wiper blade.

It is noted that the present invention is not restricted to the use of only one longitudinal strip forming the elastic carrier element that is particularly located in an central longitudinal groove of the wiper blade. Instead, said carrier element may also comprise two longitudinal strips, wherein said strips are disposed in opposite longitudinal grooves of the wiper blade.

In a preferred embodiment of a windscreen wiper device in accordance with the invention said friction coefficient is smaller than 1, preferably smaller than 0,7, more preferably smaller than 0,5.

In another preferred embodiment of a windscreen wiper device according to the invention said substance is a coating covering said longitudinal strip. Particularly, said coating is made from at least one material selected from the group consisting of poly siloxan, poly silosan, wax, oil and silicone.

In another preferred embodiment of a windscreen wiper device according to the invention said substance is a lubricant.

Preferably, said lubricant is made from at least one material selected from the group consisting of polyetrafluorothylene (PTFE), polypropylene (PP), polyethylene (PE), graphite, sulfur, molibdene, talc and glass beads.

In another preferred embodiment of a windscreen wiper device in accordance with the invention said longitudinal strip is subsequently coated with a corrosion resistant material and a protective material, and wherein said substance is provided on said protective material. Particularly, said corrosion resistant material is made from at least one material selected from the group consisting of Zn and Al, and wherein said protective material is a plastic material, such as polyester powder or film of polyethylene terephthalate (PET) or polyamide (PA).

The invention will now be explained more in detail with reference to figures illustrated in a drawing, wherein
- figure 1 is a perspective, schematic view of a preferred embodiment of a windscreen wiper device according to the invention; and

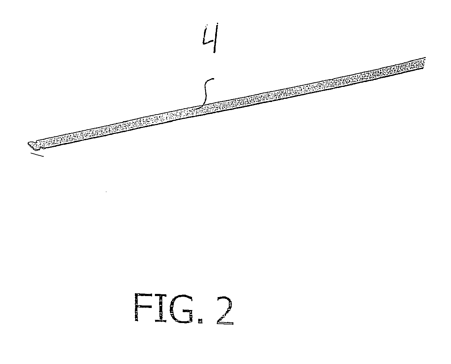

- figure 2 is a perspective view of a longitudinal strip, as used in a windscreen wiper device of figure 1.

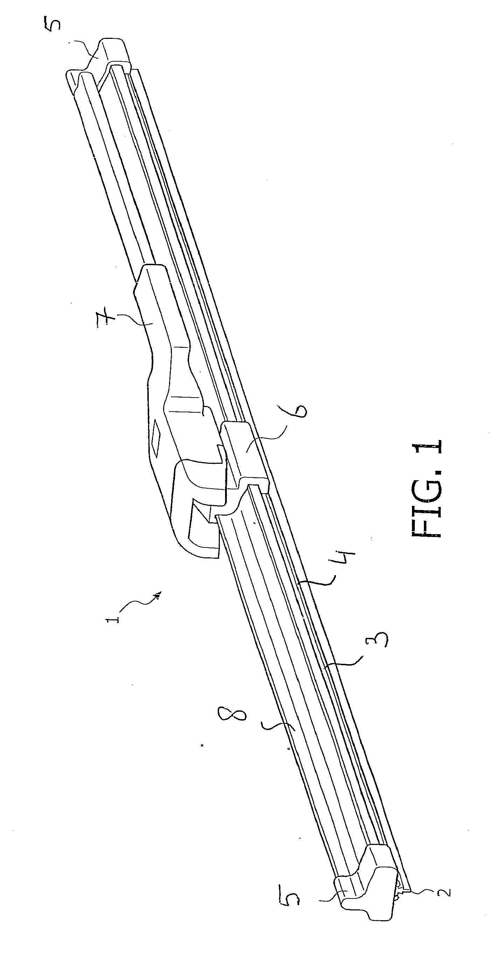

Figure 1 shows a preferred variant of a windscreen wiper device 1 according to the invention. Said windscreen wiper device is built up of an elastomeric wiper blade 2 comprising a central longitudinal groove 3, wherein a longitudinal strip or "flexor" 4 made of spring band steel is fitted in said longitudinal groove 3. Said strip 4 forms a flexible carrier element for the rubber wiper blade 2, as it were, which is thus biassed in a curved position (the curvature in operative position being that of a windscreen to be wiped). An end of said strip 4 is connected on either side of the windscreen wiper device 1 to respective connecting pieces or "end caps" 5 functioning as clamping members. In this embodiment, the connecting pieces 5 are separate constructional elements, which may be form-locked as well as force-locked to both ends of said strip 4. In another preferred variant, said connecting pieces 5 are in one piece with the strip 4 made of spring band steel. The windscreen wiper device 1 is furthermore built up of a connecting device 6 for connecting an oscillating wiper arm 7 thereto. The oscillating wiper arm 7 is pivotally connected to the connecting device 6 about a pivot axis near one end. The preferred embodiment of figure 1 according to the invention comprises a spoiler or "air deflector" 8 which is made in one piece with the rubber wiper blade 2.

Although not shown in figure 1, but fully understood by a skilled person, said oscillating arm 7 is connected to a mounting head fixed for rotation to a shaft driven by a small motor. In use, the shaft rotates alternately in a clockwise and in a counter-clockwise sense carrying the mounting head into rotation also, which in turn draws said oscillating arm 7 into rotation and by means of said connecting device 6 moves said wiper blade 2.

The longitudinal strip 4 is made of carbon steel that is sensitive to corrosion, so that a corrosion resistant coating made of Zn or Al is provided thereon. This corrosion resistant coating is subsequently covered with a black coloured protective coating in the form of a polyester powder or film of polyethylene terephthalate or polyamide.

In order to lower the friction coefficient between contact surfaces of said longitudinal strip (4) and said wiper blade (2) a next coating consisting of a resin mixture containing poly siloxan, poly silosan, wax, oil and silicone is provided on said protective coating. Thus, a slight movement of the wiper blade (2) relative to the longitudinal strip (4) is made possible in order to allow said wiper blade (2) to follow any curvature of the windscreen to be wiped. Adherence ("sticking") of said wiper blade (2) onto said longitudinal strip (4) in case the windscreen wiper device (1) in practice is exposed to high temperatures, is avoided.

The invention is not restricted to the variants shown in the drawing, but it also extends to other preferred embodiments that fall within the scope of the appended claims.

## Claims

1. A windscreen wiper device (1) comprising an elastic, elongated carrier element, as well as an elongated wiper blade (2) of a flexible material, which can be placed in abutment with a windscreen to be wiped, which wiper blade (2) includes at least one longitudinal groove (3), in which groove (3) at least one longitudinal strip (4) of the carrier element is disposed, wherein ends of said longitudinal strip (4) are connected to respective connecting pieces (5), which windscreen wiper device (1) comprises a connecting device (6) for an oscillating arm (7), wherein said oscillating arm (7) is pivotally connected to said connecting device (6) about a pivot axis near one end thereof, **characterized in that** a substance is provided on said longitudinal strip (4) in order to lower the friction coefficient between contact surfaces of said longitudinal strip (4) and said wiper blade (2).

2. A windscreen wiper device (1) according to claim 1, wherein said friction coefficient is smaller than 1, preferably smaller than 0,7, more preferably smaller than 0,5.

3. A windscreen wiper device (1) according to claim 1 or 2, wherein said substance is a coating covering said longitudinal strip (4).

4. A windscreen wiper device (1) according to claim 3, wherein said coating is made from at least one material selected from the group consisting of poly siloxan, poly silosan, wax, oil and silicone.

5. A windscreen wiper device (1) according to claim 1 or 2, wherein said substance is a lubricant.

6. A windscreen wiper device (1) according to claim 5, wherein said lubricant is made from at least one material selected from the group consisting of polyetrafluoroethylene (PTFE), polypropylene (PP), polyethylene (PE), graphite, sulfur, molibdene, talc and glass beads.

7. A windscreen wiper device (1) according to any of the preceding claims 1 through 6, wherein said longitudinal strip (4) is subsequently coated with a corrosion resistant material and a protective material, and wherein said substance is provided on said protective material.

8. A windscreen wiper device (1) according to claim 7, wherein said corrosion resistant material is made from at least one material selected from the group consisting of Zn and Al, and wherein said protective material is a plastic material.

9. A windscreen wiper device (1) according to any of the preceding claims 1 through 8, wherein said carrier element consists of one longitudinal strip (4) disposed in a central longitudinal groove (3) of said wiper blade (2).

10. A windscreen wiper device (1) according to any of the preceding claims 1 through 8, wherein said carrier element consists of two longitudinal strips (4) disposed in opposing longitudinal grooves (3) of said wiper blade (2).
